# EUROPÄISCHE PATENTANMELDUNG

(11) **EP 1 306 326 A1**
(43) Veröffentlichungstag der Anmeldung: **02.05.2003**
(21) Anmeldenummer: 02017019.7
(22) Anmeldetag: 27.07.2002
(51) Int. Cl.: B65G 47/88, B65B 23/06

(54) **Vorrichtung zur Übergabe von stossempfindlichen Gegenständen, insbesondere Eiern von einem Förderband an einem Elevator**

(30) Priorität: 24.10.2001 DE 10152362
(71) Anmelder: Big Dutchman International GmbH, 49377 Vechta (DE)
(72) Erfinder: Wienken, August, 49456 Bakum (DE)
(74) Vertreter: Siekmann, Gunnar, Dipl.-Phys.

(57) **Zusammenfassung**

Eine Vorrichtung zur Übergabe von stoßempfindlichen Gegenständen, insbesondere Eiern, von einem horizontal fördernden Sammelband an einen insbesondere vertikal fördernden Elevator, umfaßt mindestens ein im Übergangsbereich vom Sammelband zum Elevator angeordnetes Vereinzelungsrad, das eine in den äußeren Rand seines Radkörpers eingetiefte, eine Art Ei - Mitnahmetasche bildende Umfangs - Kontur aufweist. Der äußere Rand des Radkörpers besteht zumindest im Bereich der Ei - Mitnahmetasche aus einem hinsichtlich Härte und Elastizität zum Werkstoff des Radkörpers konträren Werkstoff. Vorzugsweise ist an dem äußeren Rand eine polsternde Lage aus weichelastischem Werkstoff angeordnet. Die_polsternde Lage kann mit dem Rand des Radkörpers durch Anspritzen verbunden sein.

## Beschreibung

Die Erfindung bezieht sich auf eine Vorrichtung zur Übergabe von stoßempfindlichen Gegenständen, insbesondere Eiern, von einem horizontal fördernden Sammelband an einen insbesondere vertikal fördernden Elevator, mit mindestens einem im Übergangsbereich vom Sammelband zum Elevator angeordneten Vereinzelungsrad, das eine in den äußeren Rand seines Radkörpers eingetiefte, eine Art Ei - Mitnahmetasche bildende Umfangs - Kontur aufweist.

Eine Legehennenhaltung zwecks Eierproduktion kann Käfighaltung umfassen oder auch alternative Haltung mit im Stall frei laufenden Hennen. Dabei sind stets Maßnahmen zu treffen, die sicherstellen, daß die gelegten Eier auf Sammelbänder gelangen. Es sind dies nichts anderes als umlaufende Fördermittel, durch welche gelegte Eier z. B. nach dem vorderen Stallende transportiert werden. Dort werden die Eier mit Elevatoren aus den verschiedenen Etagen und Reihen der Nester oder Käfiganlagen auf eine einheitliche Ebene gebracht und entweder auf einem Handsammeltisch oder auf einem Förderer abgelegt, von dem die Eier dann zu einer zentralen Sortieranlage bzw. einer Packanlage gefördert werden.

Ein Elevator für Eier ist so aufgebaut, daß die Eier von den einzelnen Sammelbändern der verschiedenen Etagen gesammelt und sodann einzeln und gleichmäßig auf das Transportmittel des Elevators, z. B. die Elevatorkette, aufgelegt werden können. Bei dieser Übergabe von einem Sammelband an die Elevatorkette darf es nicht zu Kollisionen der Eier kommen. Deshalb ist im Übergangsbereich von Sammelband zum Elevator wenigstens ein Vereinzelungsrad vorgesehen, welches auch Dosierrad genannt wird, weil es die Zufuhr der einzelnen Eier vom jeweiligen Sammelband zum Elevator "dosiert".

Jedes Vereinzelungsrad besteht üblicherweise aus einem drehgetriebenen Radkörper, dessen Außenrand bzw. Umfangsrand die eingetiefte Mitnehmertasche oder eine andere geeignete Einbuchtung aufweist, in der sich ein Ei während des Übergabevorganges befindet. Die Vereinzelungsräder rotieren mit vorbestimmten Umlaufgeschwindigkeiten, die an die Fördergeschwindigkeiten der jeweils zugehörigen Sammelbänder aber, insbesondere des Elevators, genau angepaßt sind. Die Rotationen der Vereinzelungsräder der einzelnen Etagen sind dabei untereinander derart abgestimmt, daß die den Etagen gemeinsame Elevatorkette nach einem festgestellten Schema mit Eiern belegt wird.

Die einwandfreie Funktion der Vorrichtung innerhalb möglichst großer Wartungsintervalle ist dabei nur gewährleistet, wenn für die Vereinzelungsräder möglichst formbeständiger Werkstoff verwendet wird. Solche Werkstoffe sind jedoch zwangsläufig so hart, daß die Eier bei einem Anprall gegen den Rand der Vereinzelungsräder beschädigt werden können. Die Ausschußrate ist bei den üblichen Übergabevorrichtungen relativ hoch.

Der Erfindung liegt die Aufgabe zugrunde, die Ei - Übergabe so zu verbessern, daß dabei entstehende Beschädigungen der Eier vermieden, zumindest aber vermindert werden.

Diese Aufgabe ist erfindungsgemäß gelöst durch die Merkmale des Patenanspruchs 1. Vorteilhafte Ausgestaltungen und Weiterbildungen der Erfindung ergeben sich aus den Unteransprüchen. Gemäß der Erfindung ist der äußere Rand des Radkörpers des Vereinzelungsrades zumindest im Bereich der Ei - Mitnahmetasche aus einem hinsichtlich Härte und Elastizität zum Radkörper selbst konträrem Werkstoff gebildet. Vorzugsweise ist der gesamte Rand im Bereich des Umfanges des Radkörpers aus einem solchen Werkstoff hergestellt. Die gesamte Peripherie des Vereinzelungsrades besteht somit erfindungsgemäß aus einem weichen Material. Der Radkörper selbst bleibt hart und fest und damit bleibt seine Formstabilität erhalten.

Es ist beispielsweise möglich, die vorstehend genannte Ausführung eines Vereinzelungsrades dadurch auszuführen, daß an dem äußeren Rand eine polsternde Lage aus weichelastischem Werkstoff angeordnet ist. Das gesamte Vereinzelungsrad besteht somit aus zwei Komponenten, nämlich einer Materialkomponente für den Radkörper und einer weiteren Materialkomponente für die polsternde Lage, die möglichst weichelastisch und somit dämpfende Eigenschaften haben soll.

Der Radkörper eines Vereinzelungsrades kann z. B. als vorteilhaft glatte Scheibe aus ABS - Kunststoff hergestellt werden. Glatte Oberflächen der Radkörper haben den Vorteil, daß die Vereinzelungsräder einfach sauber gehalten werden können und sich auch im laufenden Betrieb selbst sauber halten. Verschmutzungen der Eier und vor allen Dingen Übertragungen von Verschmutzungen werden dadurch reduziert. Eine polsternde Lage kann am Umfang, also an der Peripherie des scheibenförmigen Radkörpers beispielsweise dadurch angebracht werden, daß eine Verbindung durch Anspritzen erfolgt. Der weichelastische Kunststoff kann z. B. durch Extrusion oder auch in einer Zweifach - Spritzgußform mit dem Radkörper verbunden werden.

Selbstverständlich ist es auch möglich, die Umfangskontur des Radkörpers durch Ankleben eines Profils zu polstern.

Mit besonderem Vorteil kann jede polsternde Lage ein ähnlich einer Druckfeder wirkendes Querschnittsprofil aufweisen. Die polsternde Lage kann z. B. Hohlkammern aufweisen, die gegeneinander durch dünne und somit nachgiebige Wände abgegrenzt sind. Jede polsternde Lage kann auch in seiner freien Oberfläche entsprechenden Bereichen Erhebungen oder Vertiefungen wie z. B. Hohlkammern, dünne Rippen, Wulste, Stege, Noppen oder dergleichen Formelemente aufweisen, die bei einem Anprall der Eier an die freie Oberfläche dämpfend wirken.

Die erfindungsgemäß ausgestalteten Vereinzelungsräder gewährleisten somit, daß Eier an einen vertikal fördernden Elevator schonend und mit geringsten Verlusten übergeben werden. Ausschuß an sogenannten Knickeiern mit gerissenen oder geborstenen Schalen ist vorteilhaft reduziert.

Ein Ausführungsbeispiel der Erfindung, aus dem sich weitere erfinderische Merkmale ergeben, ist in der Zeichnung dargestellt. Es zeigen:
- Fig. 1: die schematische Seitenansicht einer Vorrichtung zur Übergabe von Eiern von in mehreren Etagen angeordneten horizontal fördernden Sammelbändern an einen vertikal fördernden Elevator,
- Fig. 2: eine Ansicht eines Vereinzelungsrades im Schnitt entlang der Linie II - II in Fig. 1 gesehen.

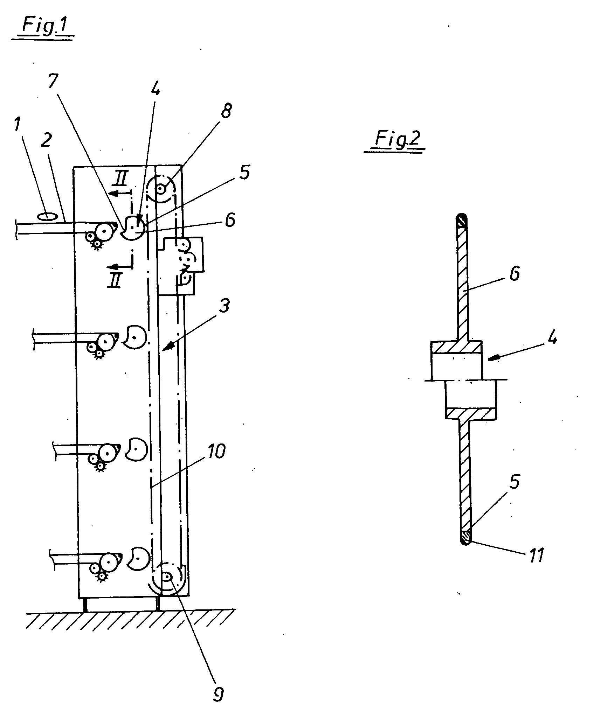

Fig. 1 zeigt eine schematische Seitenansicht einer Vorrichtung zur Übergabe von stoßempfindlichen Eiern 1 von einem horizontal fördernden Sammelband 2 an einen vertikal fördernden Elevator 3 mit mindestens einem im Übergangsbereich vom Sammelband 2 zum Elevator 3 angeordneten Vereinzelungsrad 4, das eine in den äußeren Rand 5 seines Radkörpers 6 eingetiefte, eine Art Ei - Mitnahmetasche 7 bildende Umfangskontur aufweist.

Wie es hier dargestellt ist, ist der Elevator 3 mehreren übereinander befindlichen Sammelbändern zugeordnet, wobei im Übergangsbereich zwischen den einzelnen Sammelbändern und dem Elevator 3 jeweils gleiche Vereinzelungsräder angeordnet sind.

Der Elevator 3 umfaßt über obere Umlenkrollen und untere Umlenkrollen 8 und 9 eine verlaufende Elevatorkette 10. Die Elevatorkette ist in an sich bekannter Weise mit hier nicht weiter dargestellten Kettenstäben versehen, die den übergebenen Eiern eine Auflage bieten.

Jedes horizontal förderndes Sammelband 2 transportiert aufliegende Eier 1 nach rechts in Richtung des Elevators 3, dessen Elevatorkette 10 so umläuft, daß der den Sammelbändern 2 zugekehrte Kettenstrang abwärts läuft. Synchron mit der Laufbewegung des Kettenstrangs drehen sich die Vereinzelungsräder 4, so daß sich die Ei - Mitnahmetasche 7 jedes Vereinzelungsrades 4 periodisch an der Vorderkante des Sammelbandes vorbei bewegt und gegebenenfalls ein dort bereit gestelltes Ei in der Ei - Mitnahmetasche 7 aufnimmt. Durch Weiterdrehung im Uhrzeigersinn wird das Ei aus der Mitnahmetasche auf die aus Stäben gebildete Auflage übergeben, die an dem abwärts laufenden Strang der Elevatorkette 10 angeordnet sind.

Die Eier werden somit zunächst abwärts befördert und nach Passieren der unteren Umlenkrolle 9 wieder aufwärts bis zu einem nicht weiter dargestellten Abgabebereich, beispielsweise einem rechts vom Elevator 3 aufgestellten waagerechten Sammeltisch.

Damit die vom Sammelband 2 zugeführten Eier beim Kontakt mit den Oberflächen der Vereinzelungsräder nicht beschädigt werden, ist die Umfangskontur jedes Vereinzelungsrades gepolstert, derart, daß an dem äußeren Rand 5 des Radkörpers 6 eine polsternde Lage 11 aus weichelastischem Werkstoff angeordnet ist, wie es Fig. 2 zeigt.

Fig. 2 ist eine schematische Ansicht eines Vereinzelungsrades 4 im Schnitt entlang der Linie II - II in Fig. 1. Der Radkörper 6 besteht aus einer ersten Materialkomponente, beispielsweise Hartkunststoff während die polsternde Lage 11 am Rand 5 des Radkörpers 6 aus einem hinsichtlich Härte und Elastizität dazu konträren Werkstoff, z. B. Weichkunststoff, umlaufend 5 mm, besteht.

## Patentansprüche

1. Vorrichtung zur Übergabe von stoßempfindlichen Gegenständen, insbesondere Eiern, von einem horizontal fördernden Sammelband an einen insbesondere vertikal fördernden Elevator, mit mindestens einem im Übergangsbereich vom Sammelband zum Elevator angeordneten Vereinzelungsrad, das eine in den äußeren Rand seines Radkörpers eingetiefte, eine Art Ei - Mitnahmetasche bildende Umfangs - Kontur aufweist,
**dadurch gekennzeichnet,**
**daß** der äußere Rand (5) des Radkörpers (6) zumindest im Bereich der Ei - Mitnahmetasche (7) aus einem hinsichtlich Härte und Elastizität zum Werkstoff des Radkörpers (6) konträren Werkstoff besteht.

2. Vorrichtung nach Anspruch 1, **dadurch gekennzeichnet, daß** an dem äußeren Rand (5) eine polsternde Lage (11) aus weichelastischem Werkstoff angeordnet ist.

3. Vorrichtung nach einem der Ansprüche 1 und 2, **dadurch gekennzeichnet, daß** die polsternde Lage (11) mit dem Rand (5) des Radkörpers (6) durch Anspritzen verbunden ist.

4. Vorrichtung nach einem der Ansprüche 1 und 2, **dadurch gekennzeichnet, daß** die polsternde Lage (11) mit dem Rand (5) des Radkörpers (6) durch Kleben verbunden ist.

5. Vorrichtung nach einem der Ansprüche 1 bis 4, **dadurch gekennzeichnet, daß** jede polsternde Lage (11) ein ähnlich einer Druckfeder wirkendes Querschnittsprofil aufweist.

6. Vorrichtung nach einem der vorhergehenden Ansprüche, **dadurch gekennzeichnet, daß** jede polsternde Lage (11) insbesondere im seiner freien Oberfläche entsprechenden Bereich als Dämpfungselemente wirkende radial vorstehende Hohlkammern, radial vorstehende dünne Rippen, Wulste, Stege, Noppen oder dergleichen Vertiefungen und / oder Erhebungen aufweist.
